# EUROPÄISCHE PATENTANMELDUNG

(11) **EP 1 500 644 A1**
(43) Veröffentlichungstag der Anmeldung: **26.01.2005**
(21) Anmeldenummer: 04017150.6
(22) Anmeldetag: 21.07.2004
(51) Int. Cl.: C07C 303/32, C07C 309/42, C07C 67/08, C07C 69/017, C11D 11/00

(54) **Verfahren zur Herstellung von granulierten Acyloxybenzolsulfonaten oder Acyloxybenzolcarbonsäuren und deren Salze**

(30) Priorität: 25.07.2003 DE 10334046
(71) Anmelder: Clariant GmbH, 65929 Frankfurt am Main (DE)
(72) Erfinder: Borchers, Georg, Dl., 61231 Bad Nauheim (DE); Lerch, Alexander, Dr., 63571 Gelnhausen (DE); Reinhardt, Gerd, Dr., 65779 Kelkheim (DE)
(74) Vertreter: Paczkowski, Marcus, Dr.

(57) **Zusammenfassung**

Es wird ein Verfahren zur Herstellung von granulierten Acyloxybenzolsulfonaten beansprucht, das darin besteht, dass man ein Gemisch, das im wesentlichen aus Acyloxybenzolsulfonat und optischem Aufheller besteht, granuliert.

## Beschreibung

Die vorliegende Erfindung betrifft ein Verfahren zur Herstellung von granulierten Acyloxybenzolsulfonaten oder Acyloxybenzolcarbonaten mit guter Farbqualität, indem man einen optischen Aufheller zusetzt.

Acyloxybenzolsulfonsäuren und ihre Salze sind seit langem bekannte Verbindungen. In Abhängigkeit von der Kettenlänge der Acylgruppe können sie als Tenside, Bleichaktivatoren oder in anderen Bereichen Verwendung finden. Diese Verbindungen können erhalten werden durch Reaktion von Natriumphenolsulfonat (SPS) mit dem Chlorid einer organischen Carbonsäure. Als Reaktionsmedium dienen organische Lösungsmittel wie Methylenchlorid (US 35 03 888), hochsiedende Kohlenwasserstoffe (EP 220 826), Xylol oder Toluol (EP 164 786). Gemäß US 5 069 828 wird diese Reaktion in einem aprotischen organischen Lösungsmittel in Anwesenheit eines Phasentransferkatalysators durchgeführt.
WO 01/19 771 beschreibt die Umsetzung von Acylchloriden mit SPS in Trifluoressigsäure (TFA) als Lösemittel. Bei allen Verfahren ergibt sich das Problem, dass SPS eine Reihe von Nebenreaktionen eingehen kann, wodurch die Farbe der Endprodukte signifikant negativ beeinflusst wird.
Aufgabe der vorliegenden Erfindung ist es deshalb, ein sowohl großtechnisch als auch kontinuierlich durchführbares Verfahren zur Herstellung von granulierten Acyloxybenzolsulfonaten zu entwickeln, das zu möglichst einheitlichen Produkten führt, die hinsichtlich Zusammensetzung und Farbe für den Einsatz in Wasch- und Reinigungsmitteln geeignet sind. Dabei soll das Verfahren unabhängig von der Qualität des eingesetzten Natrium-Phenolsulfonats und dessen Vorbehandlung sein.

Überraschenderweise wurde nun gefunden, dass Acyloxybenzolsulfonate oder Acyloxybenzolcarbonate in guter Farbqualität hergestellt werden können, wenn diesen optische Aufheller zugesetzt werden.

Gegenstand der Erfindung ist ein Verfahren zur Herstellung von granulierten Acyloxybenzolsulfonaten oder Acyloxybenzolcarbonaten, das im wesentlichen darin besteht, dass man ein Gemisch aus einem Acyloxybenzolsulfonat oder Acyloxybenzolcarbonaten und einem optischen Aufheller granuliert.

Als Acyloxybenzolsulfonate bzw. Acyloxybenzolcarbonate gemäß der vorliegenden Erfindung kommen vorzugsweise Verbindungen der Formel 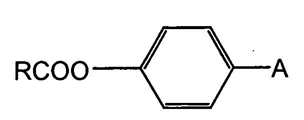 in Frage, worin R eine C₁-C₁₈-lineare oder verzweigte Alkylgruppe, A eine Gruppe der Formeln -SO₃M oder -COOM und M ein Alkali- oder Erdalkalimetall-lon bedeutet. Besonders bevorzugt ist die Verbindung Nonanoyloxybenzolsulfonat-Na Salz.

Gemäß einer weiteren Ausführungsform können auch Mischungen aus Acyloxybenzolsulfonaten oder Acyloxybenzolcarbonaten und strukturell anderen Bleichaktivatoren zusammen mit optischen Aufhellern granuliert werden. Hierfür kommen prinzipiell alle bekannten Bleichaktivatoren in Frage, die sich in ihrer Struktur von den Acyloxybenzolsulfonaten bzw. Acyloxybenzolcarbonaten unterscheiden. Beispiele hierfür sind N,N,N',N'-Tetraacetylethylendiamin (TAED), Nonanoylcaprolactam-phenylsulfonatester (APES), Glucosepentaacetat (GPA), Xylosetetraacetat (TAX), Acyloxybenzolsulfonate [z. B. Nonanoylxoybenzolsulfonat (NOBS), Natrium-4-benzoyloxybenzolsulfonat (SBOBS), Natriumtrimethylhexanoyloxybenzolsulfonat (STHOBBS)], Diacetyldioxohexahydrotriazin (DADHT), Tetraacetylglycoluril (TAGU), Tetraacetylcyansäure (TACA), Di-N-acetyldimethylglyoxim (ADMG), 1-Phenyl-3-acetylhydantoin (PAH), Nitrilotriacetat (NTA) oder Ammoniumnitrile, beispielsweise Trimethylammoniumacetonitrilchlorid.

Als optische Aufheller eignen sich alle bekannten optischen Aufheller, wie in "The Production and Application of Fluorescent Brightening Agents", M. Zahradnik, Verlag John Wiley & Sons, New York (1982) und in Ullmann's Encyclopedia of Industrial Chemistry, "Optical Brighteners", A.E. Siegrist, Eckhardt, J. Kaschig, E. Schmidt, Vol. A18, Verlag VCH Publishers, New York (1991), pp. 153-176 CC beschrieben.

Als optische Aufheller können beispielsweise eingesetzt werden Verbindungen aus der Reihe der Distyrylbenzole, Distyrylbiphenyle, Diphenylstilbene, Triazinylaminostilbene, Stilbenyl-2H-triazole, beispielsweise Stilbenyl-2H-naphtho-[1,2-d]triazole und Bis(1,2,3-triazol-2-yl)stilbene, Benzoxazole, beispielsweise Stilbenylbenzoxazol und Bis(benzoxazol), Furane, Benzofurane und Benzimidazole, beispielsweise Bis(benzo[b]furan-2-yl)biphenyl und kationische Benzimidazole, 1,3-Diphenyl-2-pyrazolin, Cumarin, Naphthalimide, 1,3,5-2-yl-Derivate, Methincyanin und Dibenzothiophen-5,5-oxid.
Bevorzugt sind anionische optische Aufheller, insbesondere sulfonierte Verbindungen.
In Betracht kommen hier Bis-(triazinylamino)stilbene, bevorzugt sulfonierte 4,4'-bis(1,3,5-triazin-2-yl-amino)stilbene, insbesondere solche der Formel

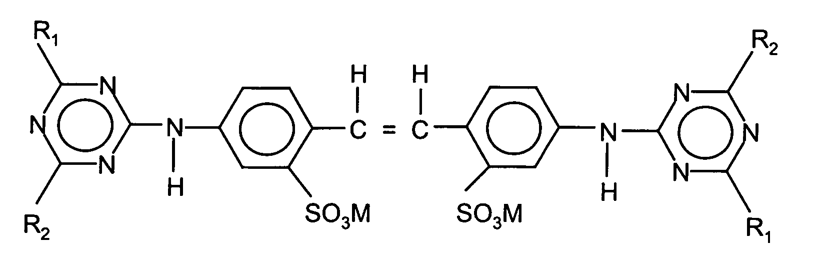

Hierin bedeutet R₁ eine substituierte Aminogruppe, bevorzugt eine Anilino-, p-Sulfoanilino, N-2-Hydroxyethyl- oder NH-2-Hydroxyethylgruppe, R₂ Chlor, Hydroxy, eine Amino- oder substituierte Aminogruppe, beispielsweise Methylamino-, N-2-Bis(hydroxyethyl)amino, N-2-Hydroxyethyl-N-methylamino, NH-2-Methoxyethyl, Anilino oder Morphilino steht und M ist H oder ein Alkali- oder Ammoniumion. Die Trans-Form ist bevorzugt.

Beispiele für diesen Typ von Aufheller sind 4,4'-Bis((4-anilino-6-bis(2-hydroxyethyl)-amino-1,3,5-triazin-2-yl)aminostilbene-2,2'-Disulfonat, Natriumsalz, N-2-Hydroxyethyl-N-2-methylamino)-1,3,5-triazin-2-yl)amino)stilben-2,2'-disulfonat, Natriumsalz (TINOPAL 5BM), 4,4'-Bis((4-amino-6-morpholino-1,3,5-triazin-2-yl)amino)stilben-2,2'-disulfonat, Natriumsalzs (TINOPAL AMS), TINOPAL DCS, wobei R₁ für p-sulfoanilino und R₂ für N-2-Bis(hydroxyethyl)amino, TINOPAL LCS, wobei R₁ für Anilino und R₂ für N-2-Methoxyethylamino, TINOPAL TAS, wobei R₁ und R₂ für Anilino stehen und BLANKOPHOR, wo R₁ für Anilino und R₂ für Methylamino steht.

Weitere bevorzugt eingesetzte optische Aufheller sind Distyrylbiphenyle, insbesondere sulfonierte 4,4'-Bis(styryl)bisphenyle, gemäß der Formel 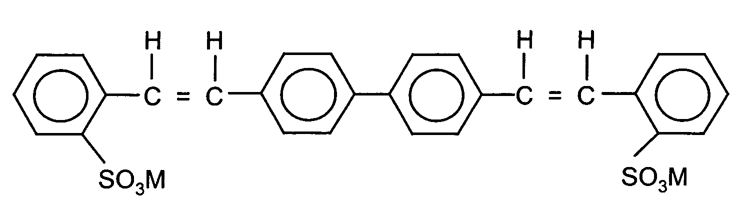 wobei M H oder Alkali bedeutet und die Ethenylgruppen bevorzugt trans-Konfiguration haben. Genannt sei 4,4'-Bis(2-sulfostyryl)biphenyl, Natriumsalz (TINOPAL CBS).

Des weiteren kommen in Betracht Triazinylaminostilbene, Distyrylbiphenyle und Mischungen daraus, 2-(4-Styrylphenyl)-2H-naphtho[1,2-d]triazol, 4,4'-Bis-(1,2,3-triazol-2-yl)stilben, Aminocumarin, 4-Methyl-7-Ethylaminocumarin, 1,2-bis(benzimidazol-2-yl)ethylen, 1,3-Diphenylpyrazolin, 2,5-Bis(benzoxazol-2-yl)thiophene, 2-Styryl-naphtho[1,2-d]oxazol, 2-(4-styryl-3-sulfophenyl)-2Hnaphtho[1,2-d]triazol und 2-(Stilben-4-yl)-2H-naphtho[1,2-d]triazol

Der Gehalt an Aufhellern in den erfindungsgemäßen Acyloxybenzolsulfonaten bzw. Acyloxybenzolcarbonaten beträgt 0,001 bis 2 Gew.-%, bevorzugt 0,002 bis 0,8 Gew.-%, besondes bevorzugt 0,003 bis 0,4 Gew.-%.

Acyloxybenzolsulfonate werden nach bekannten Methoden durch Umsetzung von wasserfreien Phenolsulfonaten mit Carbonsäurederivaten hergestellt, wobei man die Umsetzung vorteilhafter Weise mit einem Salz einer Phenolsulfonsäure durchführt, das einen Wassergehalt von weniger als 0,5 Gew.-% aufweist, und das mit einer Substanz mit basischen Eigenschaften in Kontakt gebracht wurde.

Acyloxybenzolsulfonat bzw. Acyloxybenzolcarbonat und optischer Aufheller können trocken gemischt werden und anschließend verpresst werden, beispielsweise mit Walzenkompaktoren. Das dabei erhaltene Kompaktat wird dann nach üblichen Methoden zerkleinert und die Anteile an Feinkorn und Grobkorn werden durch Sieben abgetrennt. Bevorzugt wird der optische Aufheller jedoch in gelöster Form oder in Form einer Suspension auf das Acyloxybenzolsulfonat aufgebracht. Die so erhaltene feuchte Mischung wird dann nach üblichen Verfahren granuliert.

Zur Verbesserung der Plastifizier- und Gleiteigenschaften, aber auch der Abriebfestigkeit der Bleichaktivator-Granulate können zusätzlich eine oder auch mehrere Komponenten zugesetzt, die bei Raumtemperatur flüssig sind oder unter den Verarbeitungsbedingungen als Schmelze vorliegen.

Hierfür sind besonders geeignet anionische und nichtionische Tenside und Polyalkylenglykole.

In einer bevorzugten Ausführungsform werden die Acyloxybenzolsulfonate bzw. Acyloxybenzolcarbonate mit einem anionischen oder nichtionischem Tensid und Polyalkylenglykol und optischem Aufheller, der gegebenenfalls in einem geeigneten Medium gelöst wird, vermischt und bei Temperaturen von 40 bis 90°C, vorzugsweise 60 bis 80°C und einem Druck von 10 bis 30 bar extrudiert und die erhaltenen Extrudate bei einer Temperatur von 40 bis 90°C, vorzugsweise 60 bis 80°C in einem Rondierer granuliert.

Bevorzugte anionische Tenside sind Alkalisalze, Ammoniumsalze, Aminsalze und Salze von Aminoalkoholen von folgenden Verbindungen: Alkylsulfate, Alkylethersulfate, Alkylamidsulfate und -ethersulfate, Alkylarylpolyethersulfate, Monoglyceridsulfate, Alkylsulfonate, Alkylamidsulfonate, Alkylarylsulfonate, α-Olefinsulfonate, Alkylsulfosuccinate, Alkyläthersulfosuccinate, Alkylamidsulfosuccinate, Alkylsulfoacetate, Alkylpolyglycerin-carboxylate, Alkylphosphate, Alkyletherphosphaten, Alkylsarcosinate, Alkylpolypeptidate, Alkylamidopolypeptidate, Alkylisethionate, Alkyltaurate, Alkylpolyglykolethercarbonsäuren oder Fettsäuren, wie Oleinsäure, Ricinoleinsäure, Palmitinsäure, Stearinsäure, Kopraölsäuresalz oder hydrierte Kopraölsäuresalze. Der Alkylrest all dieser Verbindungen enthält normalerweise 8 - 32, vorzugsweise 8-22 C-Atome. Besonders bevorzugt sind lineare geradkettige Alkylbenzolsulfonate, insbesondere mit einer C₈-C₂₀-, besonders bevorzugt mit einer C₁₁-C₁₃-Alkylgruppe.

Als nichtionische Tenside werden polyethoxylierte, polypropoxylierte oder polyglycerinierte Ether von Fettalkoholen, polyethoxilierte, polypropoxylierte und polyglycerinierte Fettsäureester, polyethyloxylierte Ester von Fettsäuren und von Sorbit, polyethoxilierte oder polyglycerinierte Fettamide bevorzugt.

Als Polyalkylenglykole kommen Polyethylenglykole, 1,2-Polypropylenglykole sowie modifizierte Polyethylenglykole und Polypropylenglykole in Betracht. Zu den modifizierten Polyalkylenglykolen zählen insbesondere Sulfate und/oder Disulfate von Polyethylenglykolen oder Polypropylenglykolen mit einer relativen Molekülmasse zwischen 600 und 12000 und insbesondere zwischen 1000 und 4000. Eine weitere Gruppe besteht aus Mono- und/oder Disuccinaten der Polyalkylenglykole, welche wiederum relative Molekülmassen zwischen 600 und 6000, vorzugsweise zwischen 1000 und 4000 aufweisen. Ferner werden auch ethoxylierte Derivate wie Trimethylolpropan mit 5 bis 30 EO umfasst.
Die vorzugsweise eingesetzten Polyethylenglykole können eine lineare oder verzweigte Struktur aufweisen, wobei insbesondere lineare Polyethylenglykole bevorzugt sind. Zu den insbesondere bevorzugten Polyethylenglykolen gehören solche mit relativen Molekülmassen zwischen 2000 und 12000, vorteilhafterweise um 4000, wobei Polyethylenglykole mit relativen Molekülmassen unterhalb 3500 und oberhalb 5000 insbesondere in Kombination mit Polyethylenglykolen mit einer relativen Molekülmasse um 4000 eingesetzt werden können und derartige Kombinationen vorteilhafterweise zu mehr als 50 Gew.-%, bezogen auf die gesamte Menge der Polyethylenglykole, Polyethylenglykole mit einer relativen Molekülmasse zwischen 3500 und 5000 aufweisen.
Zu den modifizierten Polyethylenglykolen gehören auch ein- oder mehrseitig endgruppenverschlossene Polyethylenglykole, wobei die Endgruppen vorzugsweise C₁-C₁₂-Alkylketten, bevorzugt C₁-C₆, die linear oder verzweigt sein können, darstellen. Einseitig endgruppenverschlossene Polyethylenglykolderivate können auch der Formel R(EO)y(PO)z entsprechen, wobei R eine Alkylgruppe mit einer C-Kettenlänge von 1 bis 20, y Zahlen von 50 bis 500 und z Zahlen von 0 bis 20 sein können.
Ebenso geeignet sind niedermolekulare Polyvinylpyrrolidone und Derivate von diesen mit relativen Molekülmassen bis maximal 30 000. Bevorzugt sind hierbei relative Molekülmassenbereiche zwischen 3000 und 30 000. Polyvinylalkohole werden vorzugsweise in Kombination mit Polyethylenglykolen eingesetzt.
Im erfindungsgemäßen Verfahren besonders bevorzugt eingesetzt wird PEG 4000.

Zur Verbesserung der Plastifizier- und Gleiteigenschaften können zusätzlich auch lineare oder verzweigte Fettsäuren, insbesondere Nonansäure oder ethoxylierte Fettsäuren mit 2 bis 100 EO zugegeben werden.

Die oben beschriebene Mischung aller Komponenten kann zusätzlich geringe Mengen eines Lösungsmittels enthalten, bevorzugt weniger als 15 Gew.-%, bevorzugt weniger als 10 Gew.-%, besonders bevorzugt weniger als 7 Gew.-%.

Weitere geeignete Zusätze sind Stoffe, die den pH-Wert während Lagerung und Anwendung beeinflussen. Dazu zählen organische Carbonsäuren oder deren Salze, wie Zitronensäure in wasserfreier oder hydratisierter Form, Glykolsäure, Bernsteinsäure, Maleinsäure oder Milchsäure. Daneben sind Zusätze möglich, die das Bleichvermögen beeinflussen, wie Komplexbildner und Übergangsmetallkomplexe, z.B. Eisen-, Cobalt- bzw. Mangan-haltige Metallkomplexe wie in EP-A-0 458 397und EP-A-0 458 398 beschrieben.

Besonders vorteilhafte Ausführungsformen der Erfindung enthalten als Bleichaktivator das Natriumsalz von Nonanoyloxyphenylsulphonat (NOBS), als Lösungsvermittler lineare geradkettige Alkylbenzolsulfonate, insbesondere mit einer C₈-C₂₀-, besonders bevorzugt mit einer C₁₁-C₁₃-Alkylgruppe (LAS), Nonansäure und Polyethylenglykol (PEG) 4000 als Konsistenzgeber und Plastifiziermittel, wobei der Anteil an NOBS 70 bis 90 Gew.-%, bevorzugt 80 Gew.-% bis 87 Gew.-%, besonders bevorzugt 81 Gew.-% bis 85 Gew.-%, an LAS 2 Gew.-% bis 10 Gew.-%, bevorzugt 3 Gew.-% bis 5 Gew.-%, besonders bevorzugt 3,7 Gew.-% bis 4,5 Gew.-%, an Nonansäure 0,1 Gew.-% bis 6 Gew.-%, 1 Gew.-% bis 4 Gew.-%, besonders bevorzugt 2,5 Gew.-% bis 3,5 Gew.-%, an PEG 4000 1 Gew.-% bis 15 Gew.-%, bevorzugt 5 Gew.-% bis 10 Gew.-%, besonders bevorzugt 7 Gew.-% bis 8 Gew.-% beträgt, sowie optischen Aufheller, bevorzugt ein 4,4'-Distyrylbiphenylderivat (TINOPAL CBS-X, Ciba Geigy) oder ein Bis-(triazinylamino)-stilbendisuldphonsäurederivat (TINOPAL DMS-X, Ciba Geigy) in Gewichtsmengen von 0,001 Gew.-% bis 2 Gew.-%, bevorzugt 0,002 Gew.-% bis 0,8 Gew.-%, besondes bevorzugt 0,003 Gew.-% bis 0,4 Gew.-%.

Vorteilhafterweise werden Bleichaktivator, beispielsweise
Nonanoyloxyphenylsulphonat (NOBS) und anionisches und/oder nichtionisches Tensid, beispielsweise Alkylbenzolsulfonat (LAS) in einem Pflugscharmischer (z.B. von Fa. Lödige) pulverförmig vermischt und auf 60°C bis 70°C erwärmt. Ein Gemisch aus Plastifiziermittel, beispielsweise Nonansäure, Polyethylenglykol, beispielsweise PEG 4000 und optischem Aufheller auf 70°C bis 90°C, bevorzugt 80°C in das auf 60°C bis 70°C erwärmte Gemisch aus Bleichaktivator und Tensid innerhalb von 60 sec bei einer Drehzahl von 50-150 min⁻¹ eingetragen. Bei der Herstellung der Flüssigkeitsmischung kann sich ein Abfiltrieren ungelöster Aufheller-Anteile vor der weiteren Verarbeitung als vorteilhaft erweisen. Anschließend wird die Produktmischung bei einer Temperatur im Bereich von 60 bis 70°C und einem Druck von 14 bar bis 22 bar strangförmig verpresst. In einer bevorzugten Ausführungsform der Erfindung wird dabei das Gemisch kontinuierlich einem 1-Wellen-Extruder, 2-Wellen-Extruder bzw. 2-Schnecken-Extruder mit gleichlaufender oder gegenlaufender Schneckenführung zugeführt, dessen Gehäuse und dessen Extruder-Granulierkopf auf die vorbestimmte Extrudiertemperatur aufgeheizt sein können. Unter der Schereinwirkung der Extruderschnecken wird das Gemisch unter Druck verdichtet, plastifiziert, in Form von Strängen durch die Lochdüsenplatte im Extruderkopf extrudiert, gegebenenfalls mit feinkörnigem Antibackmittel, beispielsweise Ti02, Kieselsäure, Zeolith, Eigenstaub abgepudert, in grobe Straw-Stücke zerkleinert und auf einen auf 40 bis 90°C, bevorzugt 60 bis 80°C, insbesondere 60 bis 65°C erwärmten Rondierer überführt. Durch das anschließende Rondierverfahren werden zylinderförmige bis kugelförmige Granulate mit definierten Partikelgrößen und sehr enger Partikelgrößenverteilung erhalten, wobei der Partikeldurchmesser zwischen 0,2 mm und 2 mm, bevorzugt zwischen 0,5 mm und 0,8 mm, die Teilchenlänge im Bereich von 0,5 mm bis 3,5 mm, idealerweise zwischen 0,9 mm und 2,5 mm liegt. Die Extrudate werden direkt auf den Rondierer gegeben oder gegebenenfalls grob vorzerkleinert. In einer bevorzugten Ausführungsform wird der erfindungsgemäße Formungsprozess kontinuierlich im Kaskadenbetrieb durchgeführt, doch ist auch ein absatzweises Arbeiten möglich.
Größe und Form der Partikel können im Rondierverfahren durch mehrere Parameter beeinflusst und herbeigeführt werden. Der Formungsprozess wird bestimmt durch die Füllmenge, die Temperatur der Mischung, die Verweilzeit der Mischung im Rondierer, durch die Drehgeschwindigkeit der Rondierscheibe, sowie durch die plastische Verformbarkeit der Mischung.
Mit abnehmender Füllmenge im Rondierer werden kürzere Zylindergranulate und eine engere Verteilung der Partikelgrößen erhalten. Mit abnehmender Temperatur und damit geringer werdender Plastizität werden längere Granulate erhalten, bei weiterer Abkühlung nimmt der Staubanteil stark zu.
Die Verweilzeit der Mischung im Rondierer hängt neben der Plastizität von der Füllmenge ab und beträgt bevorzugt 10 sec. bis 120 sec., besonders bevorzugt 20 sec. bis 60 sec., die Umfangsgeschwindigkeit 10 m/sec. bis 30 m/sec., bevorzugt 12 m/sec. bis 20 m/sec.
In einer besonderen Ausführungsform wird die Temperatur im Rondierer durch Luftoder Gasstromzufuhr (N2), bevorzugt über die Spaltvorrichtung, gesteuert. Die Temperatur der Luft- bzw. Gasströme beträgt 50 bis 120°C, bevorzugt 60 bis 90°C, so dass je nach Ausführung des Rondierers die gewünschte Arbeitstemperatur im Rondierer aufrecht erhalten werden kann.
Nach dem Formungsprozess werden die zylindrisch geformten und abgerundeten Partikel in einem nachgeschalteten Apparat, vorzugsweise in einem Fließbettkühler im kalten Luft- oder Gasstrom auf Temperaturen unterhalb 40°C abgekühlt, um ein Verkleben der Granulate zu vermeiden.

Nachfolgende Beispiele sollen die Erfindung näher erläutern ohne sie darauf einzuschränken.

### Beispiel 1: Herstellung eines NOBS-Granulates ohne optischen Aufheller

254,7 g (85,65 Gew.-%) Nonanoyloxybenzolsulphonat, Na (NOBS) und 12,8 g (4,30 Gew.-%) lineares C₁₁₋₁₃-Alkylbenzolsulfonat, Na-Salz (LAS) werden homogen vermischt und auf 60,7°C erwärmt. 8,8 g (2,96 Gew.-%) Nonansäure und 21,1g (7,09 Gew.-%) Polyethylenglykol 4000 werden auf 80°C erhitzt und in einem Pflugscharmischer der Fa. Lödige bei einer Drehzahl von 135 min⁻¹ in einem Zeitraum von 18 sec zu dem NOBS/LAS Gemisch zudosiert und weitere 42 sec homogen vermischt.
Das pastöse Gemisch wird bei einer Temperatur von 65°C bis 71°C in einen Einwellen-Domextruder der Fa. Fuji-Paudal überführt, dessen Matrize einen Bohrungsdurchmesser von 0,7 mm aufweist und bei einer Drehzahl der Extruderschnecke von 45 pro Minute, einem Durchsatz von ca. 287 g/min. extrudiert. Anschließend wird das Extrudat bei einer Temperatur von 65 bis 69°C im Batch-Rondierer der Fa. Fuji-Paudal mit einem Durchmesser von 0,23 m bei einer Drehzahl von 1245 pro Minute, einer Umfangsgeschwindigkeit von 15,71 m/Sec und einer Verweilzeit von 30 Sekunden auf Partikelgrößen von d = 0,7 mm und I = 1,4 mm. gebracht.

### Beispiel 2: Herstellung eines NOBS-Granulates mit 0,05 Gew.-% optischem Aufheller (TINOPAL CBS-X)

254,7 g (85,71 Gew.-%) Nonanoyloxybenzolsulphonat, Na (NOBS) und 12,6 g (4,24 Gew.-%) lineares C₁₁₋₁₃-Alkylbenzolsulfonat, Na-Salz (LAS) werden homogen vermischt und auf 63,1 °C erwärmt. 21,0 g( 7,07 Gew.-%) Polyethylenglykol 4000 werden auf 80°C erhitzt und dabei aufgeschmolzen und danach mit 8,7 g (2,93 Gew.-%) Nonansäure und 0,16 g (0,05 Gew.-%) TINOPAL CBS-X in einem Rührgefäß gemischt. Anschließend wird die Mischung bei einer Temperatur von 80°C zu dem NOBS/LAS-Gemisch in einen Pflugscharmischer der Fa. Lödige bei einer Drehzahl von 135 min⁻¹ in einem Zeitraum von 18 sec zudosiert und weitere 42 sec homogen vermischt.
Das pastöse Gemisch wird bei einer Temperatur von 65°C bis 71 °C in einen Einwellen-Domextruder- der Fa. Fuji-Paudal überführt, dessen Matrize einen Bohrungsdurchmesser von 0,7 mm aufweist und bei einer Drehzahl der Extruderschnecke von 45 pro Minute, einem Durchsatz von ca. 260 g/min. extrudiert. Anschließend wird das Extrudat bei einer Temperatur von 65 bis 69°C im Batch-Rondierer der Fa. Fuji-Paudal mit einem Durchmesser von 0,23 m bei einer Drehzahl von 1245 pro Minute, einer Umfangsgeschwindigkeit von 15,71 m/Sec und einer Verweilzeit von 30 Sekunden auf Partikelgrößen von d = 0,7 mm und I = 1,4 mm. gebracht.

### Beispiel 3: Herstellung eines NOBS-Granulates mit 0,40 Gew.-% optischem Aufheller (TINOPAL CBS-X)

254,8 g (85,39 Gew.-%) Nonanoyloxybenzolsulphonat, Na (NOBS) und 12,5 g (4,22 Gew.-%) lineares C₁₁₋₁₃-Alkylbenzolsulfonat, Na-Salz (LAS) werden homogen vermischt und auf 61,6°C erwärmt. 20,9 g (7,04 Gew.-%) Polyethylenglykol 4000 werden auf 80°C erhitzt und dabei aufgeschmolzen und danach mit 8,8 g (2,95 Gew.-%) Nonansäure und 1,2 g (0,4 Gew.-%) TINOPAL CBS-X in einem Rührgefäß gemischt. Anschließend wird die Mischung bei einer Temperatur von 80°C zu dem NOBS/LAS-Gemisch in einen Pflugscharmischer der Fa. Lödige bei einer Drehzahl von 135 min⁻¹ in einem Zeitraum von 18 sec zudosiert und weitere 42 sec homogen vermischt.
Das pastöse Gemisch wird bei einer Temperatur von 65°C bis 71 °C in einen Einwellen-Domextruder der Fa. Fuji-Paudal überführt, dessen Matrize einen Bohrungsdurchmesser von 0,7 mm aufweist und bei einer Drehzahl der Extruderschnecke von 45 pro Minute, einem Durchsatz von ca. 287 g/min. extrudiert. Anschließend wird das Extrudat bei einer Temperatur von 65 bis 69°C im Batch-Rondierer der Fa. Fuji-Paudal mit einem Durchmesser von 0,23 m bei einer Drehzahl von 1245 pro Minute, einer Umfangsgeschwindigkeit von 15,71 m/Sec und einer Verweilzeit von 30 Sekunden auf Partikelgrößen von d = 0,7 mm und I = 1,4 mm. gebracht.

### Beispiel 4: Herstellung eines NOBS-Granulates mit 0,8 Gew.-% optischem Aufheller (TINOPAL CBS-X)

254,6 g (84,33 Gew.-%) Nonanoyloxybenzolsulphonat, Na (NOBS) und 12,6 g (4,17 Gew.-%) lineares C₁₁-C₁₃-Alkylbenzolsulfonat, Na-Salz (LAS) werden homogen vermischt und auf 61,6°C erwärmt 22,8 g (7,55 Gew.-%) Polyethylenglykol 4000 werden auf 80°C erhitzt und dabei aufgeschmolzen und danach mit 9,5 g (3,15 Gew.-%) Nonansäure und 2,4 g (0,79 Gew.-%) TINOPAL CBS-X in einem Rührgefäß gemischt. Anschließend wird die Mischung bei einer Temperatur von 80°C zu dem NOBS/LAS-Gemisch in einen Pflugscharmischer der Fa. Lödige bei einer Drehzahl von 135 min⁻¹ in einem Zeitraum von 18 sec zudosiert und weitere 42 sec homogen vermischt.

Das pastöse Gemisch wird bei einer Temperatur von 65°C bis 71 °C in einen Einwellen-Domextruder der Fa. Fuji-Paudal überführt, dessen Matrize einen Bohrungsdurchmesser von 0,7 mm aufweist und bei einer Drehzahl der Extruderschnecke von 45 pro Minute, einem Durchsatz von ca. 261 g/min. extrudiert. Anschließend wird das Extrudat bei einer Temperatur von 65 bis 69°C im Batch-Rondierer der Fa. Fuji-Paudal mit einem Durchmesser von 0,23 m bei einer Drehzahl von 1245 pro Minute, einer Umfangsgeschwindigkeit von 15,71 m/Sec und einer Verweilzeit von 30 Sekunden auf Partikelgrößen von d = 0,7 mm und I = 1,4 mm. gebracht.

**Tabelle 1:**

| Bestimmung der Helligkeit und der Verschiebung der Farbskala nach Hunter von NOBS-Granulaten in Abhängigkeit der Konzentration an optischem Aufheller Tinopal CBS-X | | | | |
|---|---|---|---|---|
| Optischer Aufheller | Tinopal CBS-X | | | |
| Konz. optischer Aufheller | 0 | 0,05 | 0,4 | 0,8 |
| L (CBS-X) | 80,17 | 80,96 | 81,58 | 82,71 |
| a (CBS-X) | 0,31 | 2,24 | 1,82 | 1,05 |
| b (CBS-X) | 9,50 | 4,09 | 1,86 | 1,02 |
| L: Helligkeit | | | | |
| a: Farbverschiebung auf der rot-grün Hunter-Farbskala | | | | |
| b: Farbverschiebung auf der blau-gelb Hunter-Farbskala | | | | |

Die Helligkeit L, sowie die Farbverschiebungswerte a und b wurden mit einem LabScan XE LSXE und einemCalorimeter w/HunterLab DP-9000 Processor, UV Control (HunterLab) ermittelt.

Die so erhaltenen Granulate zeichnen sich durch eine signifikant bessere Farbqualität im Vergleich zu Granulaten gleicher Zusammensetzung ohne optischem Aufheller aus.

Die erfindungsgemäßen erhaltenen Granulate sind direkt zum Einsatz in Wasch- und Reinigungsmitteln geeignet. Sie können gegebenenfalls mit einer Coatinghülle versehen werden.

Weitere mögliche Zusätze sind Stoffe, die in der Waschlauge mit der aus dem Aktivator freigesetzten Peroxicarbonsäure unter Bildung reaktiver Zwischenstufen, wie Dioxiranen oder Oxaziridinen, reagieren und auf diese Weise die Reaktivität erhöhen können. Entsprechende Verbindungen sind Ketone und Sulfonimine entsprechend US-A-3 822 114 und EP-A-0 446 982.

Die Menge des Zusatzstoffes richtet sich insbesondere nach seiner Art. So werden acidifizierende Zusätze und organische Katalysatoren zur Leistungssteigerung der Persäure in Mengen von 0 bis 20 Gew.-%, insbesondere in Mengen von 1 bis 10 Gew.-%, bezogen auf das Gesamtgewicht, zugesetzt, Metallkomplexe hingegen in Konzentrationen im ppm Bereich.
Die erhaltenen Granulate zeichnen sich durch eine sehr gute Farbqualität, Abriebfestigkeit und Lagerstabilität in pulverförmigen Wasch-, Reinigungs- und Desinfektionsmittelformulierungen aus. Sie sind ideal zum Einsatz in Vollwaschmitteln, Fleckensalzen, Maschinengeschirrspülmitteln, pulverförmigen Allzweckreinigern und Gebissreinigern.

In diesen Formulierungen werden die erfindungsgemäßen Granulate meist in Kombination mit einer Wasserstoffperoxidquelle eingesetzt. Beispiele hierfür sind Perborat-Monohydrat, Perborat-Tetrahydrat, Percarbonate sowie Wasserstoffperoxid-Addukte an Harnstoff oder Aminoxiden. Daneben kann die Formulierung dem Stand der Technik entsprechend weitere Waschmittelbestandteile aufweisen, wie organische und anorganische Builder und Co-Builder, Tenside, Enzyme, Aufheller und Parfüm.

## Patentansprüche

1. Verfahren zur Herstellung von granulierten Acyloxybenzolsulfonaten oder Acyloxybenzolcarbonaten, **dadurch gekennzeichnet, dass** man ein Gemisch, das im wesentlichen aus Acyloxybenzolsulfonat oder Acyloxybenzolcarbonat und optischem Aufheller besteht, granuliert.

2. Verfahren nach Anspruch 1, **dadurch gekennzeichnet, dass** man als Acyloxybenzolsulfonat eine Verbindung der Formel 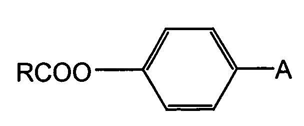 granuliert, worin R eine lineare oder verzweigte Alkylgruppe mit 1 bis 18 C-Atomen, A eine Gruppe der Formeln -SO₃M oder -COOM und M Wasserstoff, ein Alkali- oder Erdalkalimetall-lon bedeutet.

3. Verfahren nach Anspruch 1, **dadurch gekennzeichnet, dass** man Nonanoyloxybenzolsulfonat-Na Salz granuliert.

4. Verfahren nach Anspruch 1, **dadurch gekennzeichnet, dass** man Granulate herstellt, die 0,001 bis 2 Gew.-% optischen Aufheller enthalten.

5. Verfahren nach Anspruch 1, **dadurch gekennzeichnet, dass** man Acyloxybenzolsulfonat und optischen Aufheller trocken mischt, verpresst und das erhaltene Kompaktat zerkleinert.

6. Verfahren nach Anspruch 1, **dadurch gekennzeichnet, dass** man den optischen Aufheller in gelöster Form oder als Suspension auf das Acyloxybenzolsulfonat aufbringt und anschließend granuliert.

7. Verfahren nach Anspruch 1, **dadurch gekennzeichnet, dass** man ein Gemisch granuliert, das zusätzlich Verbindungen enthält, die die Plastifizier- und Gleiteigenschaften verbessern.

8. Verfahren nach Anspruch 1, **dadurch gekennzeichnet, dass** man ein Gemisch granuliert, das zusätzlich anionische Tenside, nichtionische Tenside und/oder Polyalkylenglykole enthält.
